# EUROPÄISCHE PATENTSCHRIFT

(11) **EP 0 654 691 B1**
(45) Veröffentlichungstag und Bekanntmachung des Hinweises auf die Patenterteilung: **01.04.1998**
(21) Anmeldenummer: 94117952.5
(22) Anmeldetag: 14.11.1994
(51) Int. Cl.: G02C 5/22

(54) **Brillengestell**
Spectacle frame
Monture de lunettes

(30) Priorität: 19.11.1993 DE 4339517
(43) Veröffentlichungstag der Anmeldung: 24.05.1995
(73) Patentinhaber: Uphoff, Heinrich, D-48336 Sassenberg (DE)
(72) Erfinder: Uphoff, Heinrich, D-48336 Sassenberg (DE)
(74) Vertreter: Habbel, Hans-Georg, Dipl.-Ing.

(56) Entgegenhaltungen:
- EP-A- 0 067 110
- EP-A- 0 207 190
- EP-A- 0 395 939
- FR-A- 907 403
- FR-A- 950 199
- US-A- 5 155 540

## Beschreibung

Die Erfindung betrifft ein Brillengestell gemäß dem Oberbegriff des Hauptanspruches.

Derartige Brillengestelle sind aus der US-PS 5 115 540 bekannt, und mit derartigen Gelenken ausgestattete Brillengestelle haben den Vorteil, daß eine horizontale Bewegbarkeit der Brillenbügel gegeben ist, wodurch erreicht wird, daß ein nach außen gerichteter Druck auf den Brillenbügel in seiner Tragestellung nicht sofort zu einer starken Belastung des Brillenscharniers führt, sondern daß der Brillenbügel nach außen horizontal leicht beweglich ausgebildet ist und so den Druck abfängt.

Das in der US-PS 5 115 540 beschriebene Scharnier ermöglicht jedoch keine vertikale Bewegbarkeit des Brillenbügels, d. h. von oben bzw. von unten auf den Brillenbügel gerichtete Kräfte werden an das Gelenk bzw, das übrige Brillengestell weitergeleitet und führen zu einem Brechen bzw. zu einem vorzeitigen Verschleiß des Brillengestells bzw. zu einem Lockern der Schraube des Glasschließblockes.

Aus der US-PS 3 049 974 und der EP 0 426 006 A2 sind Brillengestelle bekannt, die eine besondere Schwenkbarkeit eines Brillenbügels ermöglichen, jedoch nicht verhindern können, daß sämtliche auf den Brillenbügel einwirkenden Kräfte direkt auf das Brillengestell übertragen werden.

Aus der US-PS 1 084 064 ist ein Brillengestell bekannt, das aufgrund eines Kugelgelenkes eine beliebige Einstellung der Brillenbügel ermöglicht, jedoch muß das Kugelgelenk zum Tragen des Brillengestelles verstarrt werden, so daß die auf dem Brillenbügel aufwirkenden Kräfte direkt auf das Kugelgelenk bzw. das Brillengestell übertragen werden.

Aus der FR-PS 950 199 ist ein Gelenk für ein Brillengestell bekannt, das zwar eine gewisse vertikale Bewegbarkeit der Brillenbügel gewährleistet, wenn jedoch der Brillenbügel in seiner Tragestellung weiter nach außen gedrückt wird, werden diese Kräfte wiederum unmittelbar auf das Gelenk bzw. das Brillengestell übertragen.

Der vorliegenden Erfindung liegt die Aufgabe zugrunde, ein Brillengestell zu schaffen, bei dem die auf die Brillenbügel aufwirkenden Kräfte lediglich eine vertikale bzw. horizontale Bewegung entgegen einer Federkraft des Bügelgelenkes bewirken, um so das Bügelgelenk bzw. das übrige Brillengestell zu schonen.

Die der Erfindung zugrundeliegende Aufgabe wird durch den kennzeichnenden Teil des Hauptanspruches gelöst.

Mit anderen Worten ausgedrückt wird ein Brillengestell vorgeschlagen, an dem die selbst starren Bügel so beweglich angeordnet sind, daß die auf die Brillenbügel einwirkenden Kräfte nicht direkt auf das übrige Brillengestell übertragen werden, sondern lediglich eine Bewegung des Brillenbügels bewirken. Dadurch wird eine Schonung des gesamten übrigen Brillengestelles erreicht und die Lebensdauer eines Brillengestelles verlängert.

Vorteilhafte Ausführungen der Erfindung werden in den Unteransprüchen erläutert.

In der Zeichnung wird ein Ausführungsbeispiel der Erfindung verdeutlicht, wobei
- Fig. 1: schaubildlich einen Teil eines Brillengestelles mitsamt Brillenglas darstellt,
- Fig. 2: zeigt in einer vergrößerten Darstellung den Gelenkbereich des Brillenbügels,
- Fig. 3: stellt einen Schnitt gemäß der Linie 3 - 3 in Fig. 2 dar,
- Fig. 4: ist ein Schnitt gemäß der Linie 4 - 4 aus Fig. 3 und
- Fig. 5: stellt schaubildlich einen Teil des Brillenbügels samt glasseitigem Anschlußstück in einer nach oben bewegten Position dar.

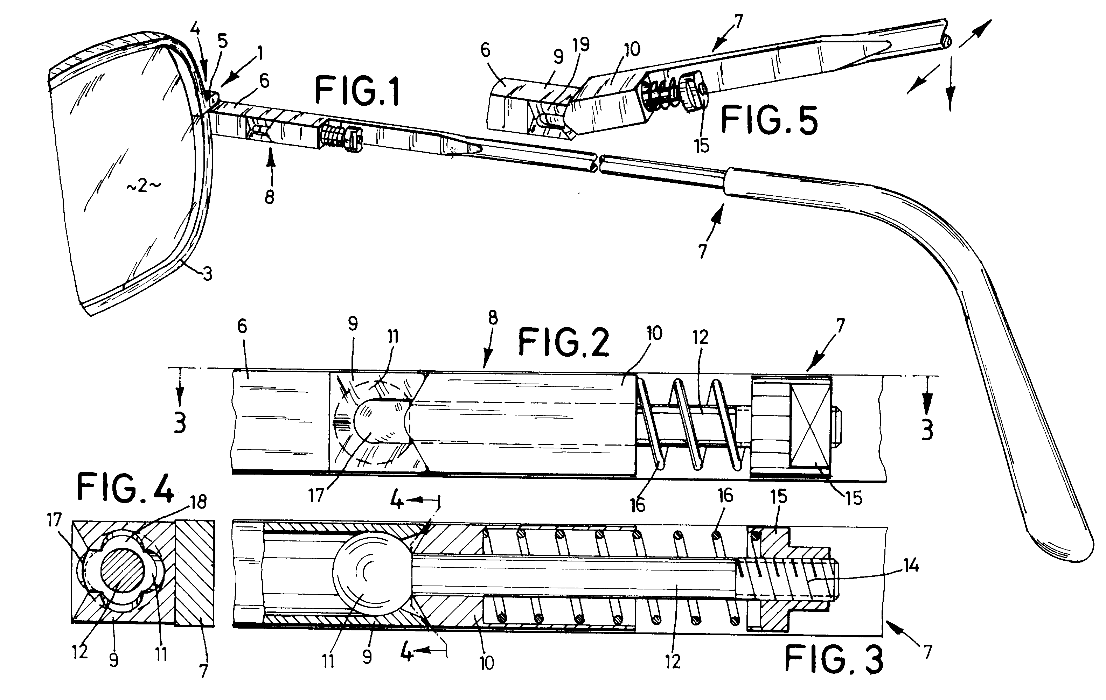

Bezugnehmend auf Fig. 1 ist ein Brillengestell 1 teilweise dargestellt, wobei ein Brillenglas 2 von einer Fassung 3 gehalten wird. Die Fassung 3 wird mittels eines Glasschließblockes 4 zusammengehalten, der eine Fixierschraube 5 aufweist. Selbstverständlich kann der Glasschließblock 4 auch eine andere Form aufweisen bzw. in anderer Art angeordnet sein.

An der Fassung 3 ist ein Steg 6 angeordnet, der den Bügel 7 trägt. Bei randlosen Brillen ist es selbstverständlich möglich, daß der Steg direkt am Glas 2 angeordnet ist. Im Kontaktbereich des Steges 6 mit dem Bügel 7 ist ein Gelenk 8 angeordnet, das die vielfache Verstellbarkeit des Bügels 7 ermöglicht.

Fig. 2 zeigt diesen Kontaktbereich des Steges 6 mit dem Bügel 7 und dem Gelenk 8 in einer vergrößerten Darstellung. Das Gelenk 8 besteht im wesentlichen aus einem Grundblock 9, der eine im wesentlichen V-förmige Ausnehmung aufweist, und einem Gleitblock 10, wobei der Grundblock 9 am Steg 6 angeordnet ist, und der Gleitblock 10 am Bügel 7.

Wie aus Fig. 3 erkennbar ist, ist der Grundblock 9 in seinem Inneren hohl, so daß er eine Gelenkkugel 11 aufnehmen kann. Die Gelenkkugel 11 weist an ihrer einen Seite einen Schaft 12 auf, der sich in Richtung des ebenfalls hohlen Gleitblockes 10 erstreckt. An seinem äußeren Ende ist der Schaft 12 mit einem Außengewinde 14 versehen, das eine Klemmschraube 15 trägt. Ein Anziehen der Klemmschraube 15 hat die Wirkung, daß eine auf dem Schaft 12 gelagerte Feder 16 zusammengepreßt wird. Die Feder 16 liegt mit ihrem anderen Ende auf einer Schulter des Gleitblockes 10 auf, so daß bei einem Zusammenpressen der Feder 16 der gesamte Gleitblock 10 an den Grundblock 9 gepreßt wird.

Da der Gleitblock 10 eine V-förmige Spitze hat und der Grundblock 9 eine dementsprechende Ausnehmung aufweist, findet eine Zentrierung des gesamten Bügels 7 in dieser aufgeklappten Tragestellung des Bügels 7 statt. Wenn der Bügel 7 beispielsweise etwas aus dieser Tragestellung herausbewegt wird, so ist er aufgrund der Federkraft bestrebt, in diese Zentrierstellung zurückzukehren.

Der Grundblock 9 weist weiterhin ein in Richtung des Bügels 7 offenes Langloch 17 auf, wodurch ein horizontales Schwenken des Bügels 7 um 90° ermöglicht wird, um den Bügel 7 aus seiner Tragestellung in eine Ruhestellung zu bewegen, z. B. wenn die Brille in ein Brillenetui gesteckt werden soll. Durch das Langloch 17 wird eine derartige Schwenkbewegung des Bügels 7 und somit des an der Gelenkkugel 11 befestigten Schaftes 12 ermöglicht. Ohne das Langloch 17 würde eine derartige Bewegung des Schaftes 12 durch die Außenwandungen 18 des Grundblockes 9 behindert.

Bezugnehmend auf Fig. 4 ist der Grundblock 9 im Schnitt dargestellt, an dessen einer Seite der Bügel 7 befestigt ist. Seitlich weist der Grundblock 9 das Langloch 17 auf, und zudem sind an dem in Richtung des Gleitblockes 10 gerichteten Ende des Grundblockes 9 Aussparungen 18 vorgesehen, die eine gewünschte Beweglichkeit des Schaftes 12 im Grundblock 9 sowohl in vertikaler als auch horizontaler Richtung ermöglichen. Ohne diese Aussparungen 18 würde der Schaft 12 schon bei geringer Bewegung des Bügels 7 an die Außenwandungen des Grundblockes 9 stoßen, wodurch eine weitere Bewegung verhindert würde. Selbstverständlich können diese Aussparungen 18 auch in anderer Art und Weise angeordnet sein, falls eine Beweglichkeit des Bügels 7 in andere Richtungen gewünscht wird.

Weiterhin sind in Fig. 4 die Gelenkkugel 11 und der Schaft 12 erkennbar.

Bezugnehmend auf Fig. 5 wird die Beweglichkeit des Brillenbügels 7 u. a. anhand der Richtungspfeile verdeutlicht. In diesem Beispiel ist der Bügel 7 nach oben gedrückt, jedoch führt dieV-förmige Ausbildung des Grundblockes 9 und des Gleitblockes 10 dazu, daß aufgrund der Federkraft der Feder 16 der Brillenbügel wieder in seine waagerechte Tragestellung zurückgleitet. Wenn der Brillenbügel 7 z. B. einen Schlag von oben erhält, bewegt sich der Brillenbügel 7 in entsprechender Weise nach unten und kehrt auch dann in seine waagerechte Ausgangsstellung zurück. In ähnlicher Weise kann der Bügel 7 in horizontaler Ebene nach außen einer einwirkenden Kraft ausweichen und kehrt auch dann in seine Tragestellung zurück. Wenn ein leichter Druck den Bügel 7 nach innen bewegt, so erfolgt auch dann eine nachfolgende Zentrierung des Bügels 7 in seine Tragestellung. Ist der Druck größer, so verläßt der Gleitblock 10 den Zentrierbereich für die Zentrierung in der Tragestellung und gleitet in eine Aufnahmemulde 19, die die V-förmige Spitze des Gleitblockes 10 aufnimmt. In dieser Position steht der Bügel 7 senkrecht zum Steg 6, und die Brille kann z.B. in ein Brillenetui gelegt werden. Aufgrund der V-förmigen Ausbildung der Aufnahmemulde 19 erfolgt eine Zentrierung des Bügels 7 in der eingeklappten Ruhestellung, wodurch unerwünschte Bewegungen des Bügels 7 vermieden werden.

Durch ein Anziehen der Klemmschraube 15 wird der Federdruck auf den Gleitblock 10 stufenlos erhöht, was zum einen die Zentrierwirkung des Gelenkes 8 erhöht und was zum anderen zur Folge hat, daß die Kräfte erhöht werden müssen, um den Bügel 7 zu bewegen. Eine härtere Einstellung der Federkraft ist z. B. dann von Vorteil, wenn die Brille z. B. beim Sport besonders stark strapaziert wird und ein fester Sitz der Brille wichtig ist. Nach dem Sport kann die Federkraft in einfacher Weise wieder reduziert werden, wobei diese Einstellungsarbeiten problemlos durchgeführt werden können.

In dem gezeigten Ausführungsbeispiel liegt die Schraube 15 seitlich offen, wobei die Anordnung des Gelenkes 8 selbstverständlich auch innerhalb des Bügels 7 vorgenommen werden kann, um z. B. ästhetischen Gesichtspunkten gerecht zu werden oder ein Verschmutzen des Gelenkes 8 zu verhindern.

Durch die Beweglichkeit der Brillenbügel 7 wird die Belastung z. B. des Glasschließblockes 4 und der Brillengläser 2 bei einem Stoß auf das Brillengestell vermieden, und ein häufiges Nachziehen der Schraube 5 des Glasschließblockes 4 oder am Bügelscharnier ist nicht mehr notwendig.

Durch das Gelenk 8 wird ferner ein Verschleißen von Scharnierösen verhindert, das bei herkömmlichen Brillengestellen auftritt. Ferner ist ein Lösen der Scharnierschrauben ausgeschlossen, das bei üblichen Brillengestellen ein häufiges Nachziehen der Scharnierschrauben erforderlich machte. Somit erhöht sich die Haltbarkeit eines mit Gelenken 8 ausgestatteten Brillengestells, auch wenn es zu keinem vorzeitigen Bruch des Brillengestelles kommen sollte.

## Patentansprüche

1. Brillengestell mit Bügeln (7), die horizontal schwenkbar über ein Gelenk (8) mit einem glasseitigen Anschlußstück (6) verbunden sind, wobei das Gelenk aus einem Grundblock (9) und einem Gleitblock (10) besteht, die mittels eines Schaftes miteinander verbunden sind, der an seinem einen Ende eine Gelenkkugel (11) aufweist, und der mit seinem anderen Ende unter Zwischenschaltung einer Feder (16) an dem Gleitblock (10) festgelegt ist, und wobei der Grundblock (9) an seiner zum Gleitblock (10) hin orientierten Stirnseite eine Öffnung und eine dahinter liegende gelenkspfannenartige Ausnehmung für die Aufnahme der Gelenkkugel (11) sowie einen horizontalen, bis zur gelenkspfannenartigen Ausnehmung und der stirnseitigen Öffnung in den Grundblock (9) hineinreichenden Schlitz (17) aufweist, in welchem der Schaft (12) beim Zusammenklappen der Bügel horizontal schwenkbar ist, dadurch gekennzeichnet, daß die stirnseitige Öffnung im wesentlichen vertikal ausgerichtete Aussparungen (18) aufweist, derart, daß sich der Schaft (12) bei vertikalen Bewegungen des Bügels (7) in diese Aussparungen (18) bewegen kann.

2. Brillengestell nach Anspruch 1, dadurch gekennzeichnet daß der Grundblock (9) an seiner Stirnseite eine im wesentlichen V-förmige Ausnehmung aufweist und daß der Gleitblock (10) eine im wesentlichen V-förmige Spitze aufweist.

3. Brillengestell gemäß Anspruch 1 oder Anspruch 2, dadurch gekennzeichnet, daß am Grundblock (9) für den eingeklappten Zustand des Bügels (7) eine Aufnahmemulde (19) angeordnet ist, deren Form im wesentlichen der Spitze des Gleitblockes (10) angepaßt ist.

## Claims

1. Spectacle frame having side-arms (7) which are connected to a lens-side connection piece (6) so as to be horizontally pivotable by means of a joint (8), the joint comprising a basic block (9) and a slide block (10) which are connected to one another by means of a shank which has, at one end, a joint ball (11) and, by its other end, is fixed on the slide block (10) with interposition of a spring (16), and the basic block (9) having an opening at its end face directed towards the slide block (10) and a recess, which lies behind said opening and is designed in the manner of a joint socket, for receiving the joint ball (11), and also having a horizontal slot (17) which extends into the basic block (9) as far as the joint-socket-like recess and the end-face opening, and in which the shank (12) is horizontally pivotable as the side-arms are folded together, characterized in that the end-face opening has cutouts (18), aligned substantially vertically, in such a way that the shank (12) can move into these cutouts (18) in the event of vertical movements of the side-arm (7).

2. Spectacle frame according to Claim 1, characterized in that the basic block (9) has a substantially V-shaped recess at its end face, and in that the slide block (10) has a substantially V-shaped tip.

3. Spectacle frame according to Claim 1 or Claim 2, characterized in that a receiving depression (19) is arranged on the basic block (9) for the folded-in state of the side-arm (7), the shape of which receiving depression is substantially adapted to the tip of the slide block (10).

## Revendications

1. Monture de lunettes comprenant des branches (7) qui sont reliées à une pièce de raccordement (6) côté verres de façon à pouvoir pivoter horizontalement, au moyen d'une articulation (8), l'articulation étant composée d'un bloc de base (9) et d'un bloc coulissant (10), lesquels sont reliés l'un à l'autre au moyen d'une tige qui présente une rotule d'articulation (11) à une de ses extrémités et qui est fixée au bloc coulissant (10) à son autre extrémité, avec interposition d'un ressort (16), le bloc de base (9) présentant, sur sa face frontale orientée vers le bloc coulissant (10), une ouverture et une cavité en forme de cuvette d'articulation située en carrière et destinée à recevoir la rotule d'articulation (11), et présentant aussi une fente horizontale (17) qui se prolonge dans le bloc de base (9) jusqu'à la cavité en forme de cuvette d'articulation et jusqu'à l'ouverture frontale, et dans laquelle la tige (12) peut pivoter horizontalement pour le repliage des branches, caractérisée en ce que l'ouverture frontale présente des encoches (18) orientées sensiblement verticalement de telle manière que la tige (12) puisse s'engager dans ces encoches (18) lors des mouvements verticaux des branches (7).

2. Monture de lunettes selon la revendication 1, caractérisée en ce que le bloc de base (9) présente une cavité sensiblement en forme de V dans sa face frontale et en ce que le bloc coulissant (10) présente une pointe sensiblement en forme de V.

3. Monture de lunettes selon la revendication 1 ou la revendication 2, caractérisée en ce que, sur le bloc de base (9), est formé, pour l'état replié de la branche (7), un auget de logement (19) dont la forme est sensiblement adaptée à la pointe du bloc coulissant (10).
